# EUROPEAN PATENT APPLICATION

(11) **EP 3 260 314 A1**
(43) Date of publication of application: **27.12.2017**
(21) Application number: 17177045.6
(22) Date of filing: 21.06.2017
(51) Int. Cl.: B60C 27/20

(54) **CHAIN TRACK**

(30) Priority: 23.06.2016 FI U20160111 U
(71) Applicant: Koneosapalvelu Oy Aliranta, 35700 Vilppula (FI)
(72) Inventor: Aliranta, Mika, 35820 Mänttä (FI); Puolitaival, Jarmo, 86300 Oulainen (FI)
(74) Representative: Kolster Oy Ab

(57) **Abstract**

The invention relates to a chain track for use in a forest machine or another work machine, or in their trailers on one or more tyres so that the chain track is arranged to cover the tyre or tyres in their entirety, said chain track having grouser shoes (1) that have a body (1a) and side guides (3), the body (1a) having an outer surface (1aa), inner surface (1ab), sides (1ac), and ends (1ad). According to the invention, the grouser shoe (1) has, on the outer surface (laa) of its body (1a), a straight portion (lah), as seen from the front, which is at least 70 percent of the length (lae) of the body (1a).

## Description

The invention relates to a chain track for use in a forest machine or another work machine, or in their trailers on one or more tyres so that the chain track is arranged to cover the tyre or tyres in their entirety, said chain track having grouser shoes that have a body and side guides, the body having an outer surface, inner surface, sides, and ends.

Chain tracks are used in forest machines, trailers, or other machines and devices that move on a soft terrain. The soft-terrain chain tracks on the market have a grouser shoe which is wider than the standard grouser shoe, and the grouser shoe is shaped according to the tyre profile. In the chain track, the gap between the grouser shoes is shorter than in the standard chain track, but is clearly distinguishable nevertheless.

The current chain tracks have the disadvantage that the grouser shoe is not perfectly flat, but shaped in accordance with the tyre profile. For this reason, the centre line of the chain track sinks deeper into ground than the edge of the chain track. The fair gap between the grouser shoes in the chain track allows soil to yield between the grouser shoes, breaking the surface of the ground.

It is the purpose of the invention to bring forth a chain track having a grouser shoe that features a flat contact surface with the terrain and has a small gap in between the grouser shoes.

The above disadvantages may be eliminated and the above goals be reached by the inventive chain track which is characterised by what is disclosed in the characterising part of Claim 1. The preferred embodiments of the chain track are disclosed in the dependent claims.

The inventive chain track has, on the body of the grouser shoe, on the outer surface thereof, a straight portion, as seen from the front, which is at least 70 percent of the length of the body. The subordinate claims describe preferred embodiment of the invention.

The most important advantages of the invention are that the grouser shoe of the chain track is, at its load-bearing part, entirely flat whereby the surface pressure is evenly distributed on the area of the entire grouser shoe. The flat shape and symmetry of the grouser shoes make it possible to leave the gap in between the grouser shoes of the chain track small (less than 2 cm), whereby soil between the grouser shoes may not pass through the chain track. The chain track area simultaneously in contact with ground is larger than with the current technology. The lesser sinking of the chain track into ground lowers the rolling resistance, consequently reducing fuel consumption. The chain track does not damage forest roads. The end of the grouser shoe may be slightly bent towards the tyre, which improves the turning ability of the work machine. It is obvious that by the use of the invented chain track, damages to the soil or terrain will be lesser and consequently savings will be achieved in the repair costs of the terrain.

In the following the invention is explained in detail with reference to the accompanying drawings.

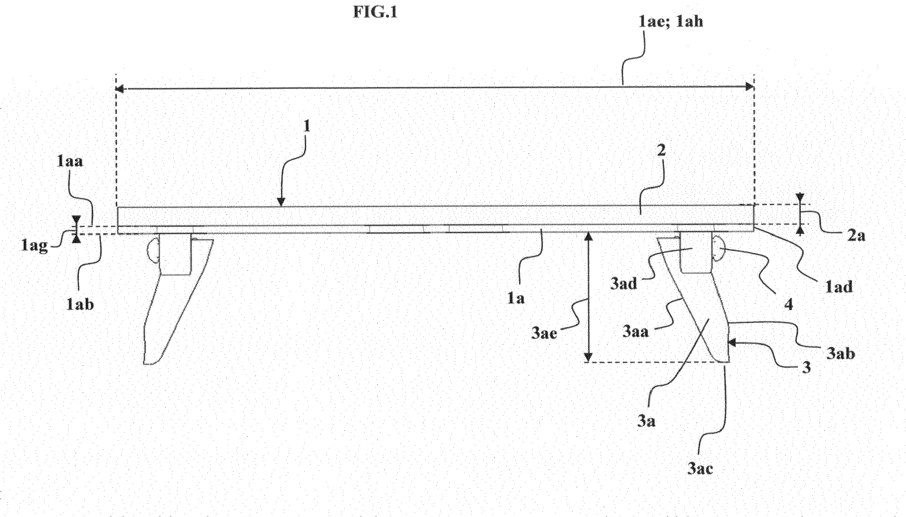

Figure 1 shows an inventive grouser shoe as seen perpendicularly from the front.
Figure 2 shows two interconnected grouser shoes of Figure 1 as seen perpendicularly from the end.
Figure 3 shows an inventive grouser shoe as seen perpendicularly from the front. The ends of the grouser shoes are bent inwards.

The Figures show the following parts and points. Grouser shoe 1 having a body 1a, traction elevations 2, and side guides 3 connected to the body,

The body 1a has an outer surface 1aa, inner surface 1ab, sides 1ac, and ends 1ad. The inner surface 1ab is against the tyres/tyres. The side guides 3 on the opposite sides of the body extend obliquely downwards and keep the chain track on the tyre/tyres.

The outer surface 1aa of the body has one or more traction elevations 2 extending outwards to facilitate the moving of the machine on a terrain, such as ground, road, etc.

The body 1a has a length 1ae. The body 1a has a width 1af. The body 1a has a thickness 1ag. The body 1a has a straight portion 1ah.

The height of the traction elevation 2 is 2a. The height 2a of the traction elevation 2 (against ground) is most preferably 28 mm. In addition, traction studs that may be 25 - 70 mm high may be welded on the grouser shoe 1. On the inside of the grouser shoe 1 (on the inner surface 1ab of the body 1a, against the tyre) there may be a prior art, welded traction surface 10-20 mm which prevents the track from slipping on the tyre. The prior art traction stud may be on the traction elevation 2. The traction stud is not shown in the Figures.

The side guide 3 has a body 3a. The body 3a has an inner surface 3aa, outer surface 3ab, tip 3ac, and fastening loop 3ad. The inner surface 3aa is the surface on the tyre side. The chain track has a fastening loop 3ad from which the grouser shoes 1 are connected to each other in a manner known per se by a chain and by connecting means known per se. The side guide 3 has a height 3ae and a width 3af. The height 3ae of the side guide 3 is most advantageously 195 mm or more as measured from the body 1a to the tip 3ac of the side guide 3.

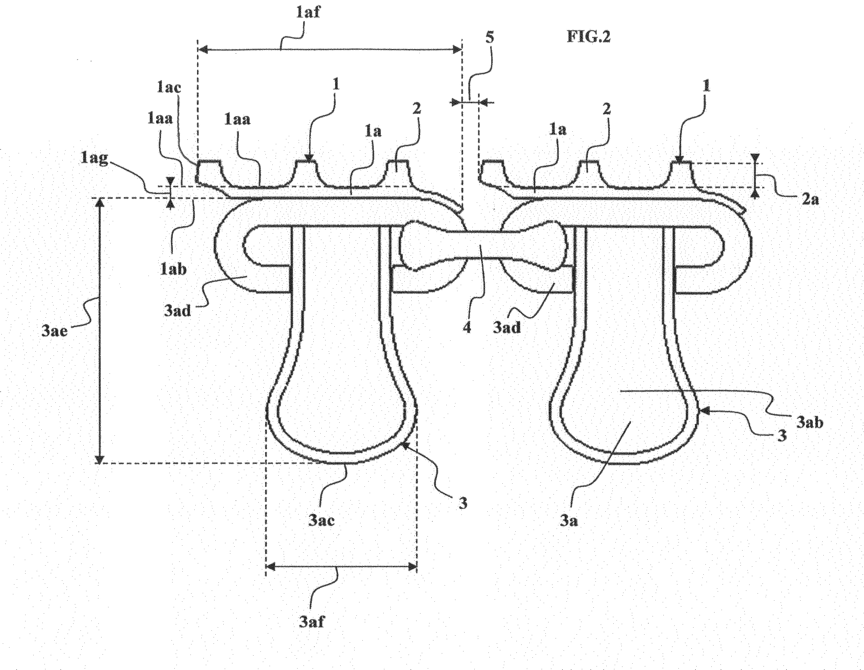

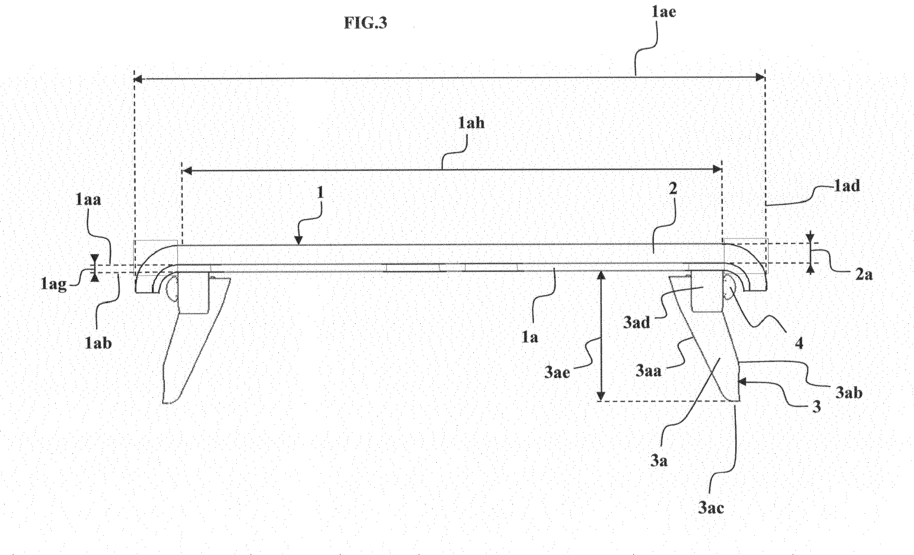

Figure 2 shows a combiner 4 of the grouser shoes, which is a chain known per se or another connecting means known per se, such as a loop welded together out of metal, whereby the chain track is connected by its ends by a chain track connector known per se on a tyre/tyres. Figure 2 indicates the gap 5 between the grouser shoes. As shown in Figure 3, the ends of the grouser shoe are bent towards the tyre.

The Figures show a chain track for use in forest machines or another work machine, or in their trailers on one or more tyres so that the chain track covers the tyre or tyres in their entirety, the chain track having grouser shoes 1, the grouser shoe 1 having a body 1a and side guides 3, the body 1a having an outer surface 1aa, inner surface 1ab, sides 1ac, and ends 1ad.

The inventive grouser shoe 1 has, on the outer surface 1aa of its body 1a, a straight portion 1ah, as seen from the front, which is at least 70 percent of the length 1ae of the body 1a. The clearance between the sides 1ac of successive grouser shoes 1 of the chain track, that is, the grouser shoe gap 5, is 20 mm or less. The height 3ae of the side guide 3 is as large as or larger than 195 mm or 50 - 80 percent of the height of the tyre. The height of the tyre refers to the height dimension of the tyre, not the measure of the diameter of the tyre. The outer surface 1aa of the grouser shoe 1 is closed. The height 2a of the traction elevation 2 is 20 - 35 mm.

The chain track according to the invention is used in the same way as the known chain tracks.

It is apparent to a person skilled in the art that the above exemplary embodiments are rather simple in structure and operation for the purposes of illustration. By following the model shown in this patent application, it is possible to construct different structural solutions that utilise the inventive idea disclosed in this patent application. The invention is not restricted to the alternatives disclosed in the above, but many variations are possible within the scope of the inventive idea defined by the attached claims

## Claims

1. A chain track for use in a forest machine or another work machine, or in their trailers on one or more tyres so that the chain track is arranged to cover the tyre or tyres in their entirety, said chain track having grouser shoes (1) that have a body (1a) and side guides (3), the body (1a) having an outer surface (1aa), inner surface (1ab), sides (1ac), and ends (1ad), **characterised in that** grouser shoe (1) has, on the outer surface (1aa) of its body (1a), a straight portion (1ah), as seen from the front, which is at least 70 percent of the length (1a)e of the body (1a).

2. A chain track as claimed in claim 1, **characterised in that** the clearance between the sides of successive grouser shoes (1) of the chain track, the grouser shoe gap (5), is 20 mm or less.

3. A chain track as claimed in claim 1, **characterised in that** the height (3ae) of the side guide (3) is as large as or larger than 195 mm or 50 - 80 percent of the height of the tyre.

4. A chain track as claimed in claim 1, **characterised in that** the outer surface (1aa) of the grouser shoe (1) is closed.

5. A chain track as claimed in claim 1, **characterised in that** the outer surface (1aa) of the chain track has one or more traction elevations (2) and **in that** the height (2a) of the traction elevation (2) is approximately 20-35 mm.
